# EUROPEAN PATENT APPLICATION

(11) **EP 3 147 815 A1**
(43) Date of publication of application: **29.03.2017**
(21) Application number: 15460080.3
(22) Date of filing: 23.09.2015
(51) Int. Cl.: G06K 9/00, G06F 3/0354, G06K 9/22

(54) **A SYSTEM FOR HAND-WRITTEN SIGNATURE AND VERIFICATION OF ITS AUTHENTICITY**

(71) Applicant: Politechnika Gdanska, 80-233 Gdansk (PL)
(72) Inventor: CZYZEWSKI, Andrzej, 81-577 Gdynia (PL); LECH, Micha, 81-402 Gdynia (PL); CICHOWSKI, Janusz, 80-103 Gdansk (PL); HOFFMANN, Piotr, 80-809 Gdansk (PL)

(57) **Abstract**

Te unit to give a handwritten signature and verify its authenticity provided with a hand-held tool equipped with multiple sensors comprising acceleration sensor, pressure and clamp sensor and the transmission unit that is connected preferably in non-contact manner with the receiving unit (UO) which is connected to a verification unit (UM), preferably connected to the screen characterized in that the hand-held tool (D) is additionally equipped with at least one rotation sensor, preferably registering rotation in X, Y, Z axes, at least one magnetic field sensor, preferably registering magnetic field strength in X, Y, Z axes and displacement sensor analyzing the movement of the tip of a hand-held tool in X, Y, Z axes, and verification unit (UM) comprising a pre-processing unit (UW), signature acquisition unit (UP), parameterization unit (UC) and authenticity verification unit (UA).

## Description

The present invention relates to a system for giving a handwritten signature and verifying its authenticity.

Patent CN 102135823 A discloses pen-shaped device used to give handwritten signature. The device is composed of a main processing unit, triaxial algorithm, analog-to-digital and wireless transmission module. The whole bus is connected bidirectionally with intelligent software. Said solution does not solve the issues of authentication of the folding signature using a simulant pen equipped with additional sensors: a gyroscope, magnetometer, displacement sensor, clamp and pressure sensors.

Patent EP 1668670 A4 discloses a method for collecting and transmitting the data from the signature device. The collected biometric data are combined with encryption data. The user gives the signature, which is then encoded and stored in a secure form. In order to perform the verification, the user gives a signature, which also is encoded, and then compared with encoded information - a pattern and signature of the user. These solution does not solve the issues of the use of a dedicated wireless device reproducing the pen equipped with a gyroscope, magnetometer, displacement sensor, pressure sensor. Moreover, it does not solve problems of signature verification based on the pattern.

Patent WO 2005010634 A2 discloses a method for recording handwriting in relation to text and designs. The method can use the smart pen, a special washable ink and paper, and software to manage the data collected. Pen may include changing the function of the system, processor, memory and a system of wired or wireless communication. Pen can also contain advanced notification features, digital camera, recording and voice recognition, support for calendar, biometric sensors. This solution does not solve the problems of the registered signature verification using static and dynamic form. Registering the static form is carried out using a displacement sensor. Registering the dynamic form is done using integrated sensors installed in device mimicking a pen used for giving signatures.

Patent US 4078226 discloses a solution wherein to verify the authenticity of the signature, a pen equipped with piezoelectric transducers arranged around the pent internals is used. The pen thrust on the substrate is transferred to the transducers, which generate the corresponding signal on the base of which the authenticity verification of the signature is carried out. This solution does not solve the issues of the use of a dedicated wireless device reproducing the pen equipped with additional sensors enabling accurate verification of the identity of a person based on the given signature.

EP 0097807 B1 discloses a device shaped like a pen communicating with external devices performing authentication based on information from the acceleration sensors and pressure sensors placed in the device. The acceleration is measured in two axes. The signature placed on a flat surface (eg. paper). This solution does not solve the issues of the use of a wireless device reproducing the pen equipped with additional sensors: gyroscope, magnetometer, displacement sensor, a pressure sensor to the surface.

From EP 1846868 B1 discloses computer system used to acquire, analyze and authenticate the electronic handwritten signature. The person giving the signature, performs a series of three-dimensional movements that generate kinetic information that is processed by a special pen. The information is collected by the MEMS placed in a pen. The system collects information by recognizing dynamic and biometric characteristics. Based on the algorithm, the system compares the collected information to the model. This solution does not solve the issues of the use of a wireless device reproducing the pen equipped with additional sensors: gyroscope, magnetometer, displacement sensor, a pressure sensor to the surface.

A system for signature and verification of its authenticity provided with a hand tool equipped with a system of sensors comprising an acceleration sensor, pressure sensor and clamping force sensor, and a transmitting system which is connected preferably without contact with the receiving unit, which is connected to verification unit, preferably connected to the screen characterized according to the invention in that the hand-held tool is additionally equipped with at least one rotation sensor, preferably registering rotation in X, Y, Z axes, at least one magnetic field sensor, preferably recording magnetic field in X, Y, Z axes. and displacement sensor analyzing the movement of the hand-held tool tip in X, Y axes.

The verification system contains the pre-processing unit, signature acquisition unit, parameterization unit and unit for verification of the authenticity.

Preferably, the pre-processing unit consists of the signature trajectory acquisition unit acquired from the displacement sensor and transmitted to the first buffer associated with a first filtration unit, which in turn is connected to the first noise removing unit, connected to the first array of eliminating distortion. The pre-processing unit is also equipped with an acquisition of the dynamic parameters of the signature received from the acceleration sensors, rotation of the magnetic field, clamp and pressure that are sent to a second buffer coupled to the second filtration system, which in turn is connected to a second noise removal unit, connected to the second distortion eliminating unit. The first distortion eliminating unit and the second distortion eliminating unit are connected to signature beginning and end detection unit.

The first unit to eliminate distortion and a second unit to eliminate distortion are connected in parallel to occurring as the first in a signature acquisition unit static parameters buffer and dynamic parameters buffer. In the signature acquisition unit, the beginning and end of the signature detection unit is connected to feed back to the clock unit, which is connected to the timestamps buffer, displacement measuring unit, accelerations measuring unit, magnetic field strength unit, rotation measuring unit, tension measuring unit, and preferably clamp measuring unit. Static data buffer is connected to displacement measuring unit, which is connected to displacement buffer. Dynamic parameters buffer is connected in parallel with the acceleration measurement unit, and the unit of measuring rotation and unit of measuring magnetic field strength, and pressure measuring unit, and preferably clamp measuring unit. Acceleration measuring unit is connected to acceleration buffer. Rotation measuring unit is connected to rotation buffer, the magnetic field measuring unit is connected to the magnetic field buffer, pressure measuring unit, and preferably clamp measuring unit are connected to pressure buffer and preferably clamp buffer.

Preferably, in the parameterization unit there are static measurement unit and dynamic measurement unit and the static measurement unit is connected with the displacement buffer present in the signature acquisition unit and with the static data comparative unit present in the authenticity verification unit system, and dynamic measurement unit is connected to acceleration buffer present in signature acquisition unit, rotation buffer, magnetic field buffer, pressure buffer and preferably a clamp buffer and static data comparative unit contained in authenticity verification unit.

Preferably, in the authenticity verification unit, there is static data comparative unit, which is coupled with the memory of reference static measurements and dynamic data comparative unit is coupled with the memory of reference dynamic measurements.

By utilizing the invention, a high reliability in verification of signatures given by a natural person is obtained, much greater than the ordinary visual verification.

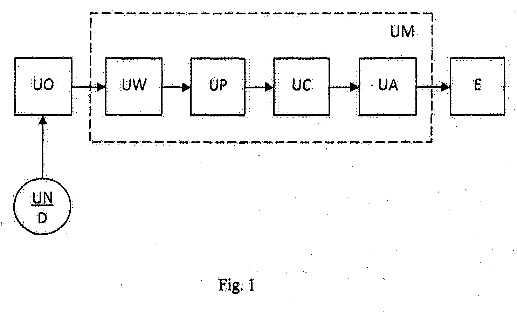

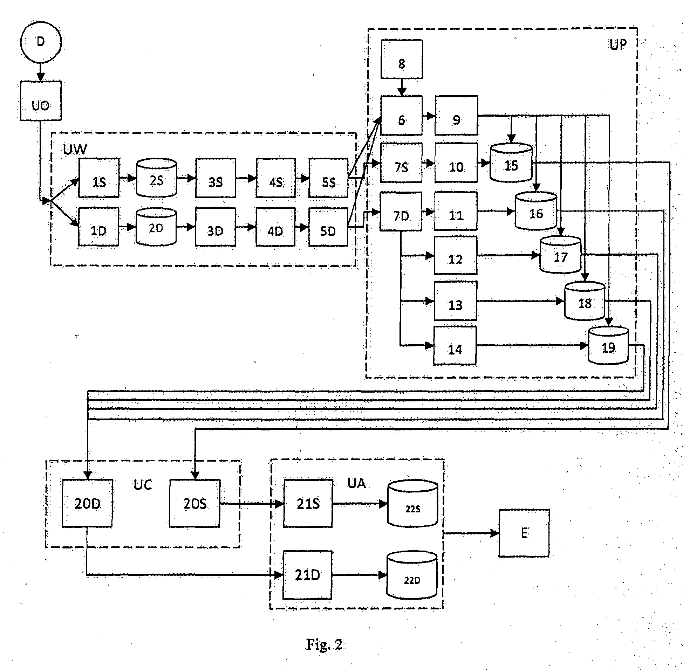

The invention is further explained in the drawing, in which fig. 1 shows a general block diagram of the system, fig. 2 is a detailed block diagram of the system, and the embodiment.

Hand tool D is equipped with a sensor unit and a transmitting unit UN, which is connected without contact with the receiving unit UO, which is connected to a verification unit UM connected to the screen E.

The sensor unit consists of acceleration sensor, recording acceleration in the X, Y, Z, rotation sensor recording rotation in X, Y, Z, magnetic field sensor recording magnetic field in the X, Y, Z, pressure sensor, hand tool D clamp sensor, and displacement sensor analyzing displacement of tip of hand tool in D X, Y.

UM verification system comprises a pre-processing unit UW, signature acquisition unit UP, parameterization unit UC and authenticity verification unit AU.

The pre-processing UW consists of the signature trajectory acquisition unit 1S acquired by displacement sensor and transferred to the first buffer 2S, associated with a first filtration unit 3S, which in turn is connected to a first array removing noise 4S, connected to the first array of eliminating distortion 5S. The pre-processing unit UW is equipped with an acquisition of the dynamic parameters of the signature ID acquired from acceleration, rotation, magnetic field, clamp and pressure sensors that are transmitted to the second buffer 2D connected to a second filtration system 3D, which in turn is connected to a second unit of 4D noise removal, combined with a second distortion elimination unit 5D. The first distortion elimination unit 5S and a second distortion elimination unit 5D are connected to signature beginning and end detection unit 6, and connected in parallel with static data buffer 7S and dynamic data buffer 7D occurring as a first in signature acquisition unit UP.

In acquisition unit UP, signature beginning and end detection unit 6 is connected to feed back the clock 8 unit, which is connected to the timestamps buffer 9, displacement measuring unit 10, accelerations measuring unit 11, rotation measuring unit 12, magnetic field measuring unit 13, pressure and clamp measuring unit 14. Static data buffer 7S is connected to the displacement measuring unit 10 which is connected to the displacement buffer 15. The dynamic data buffer 7D is connected in parallel with the acceleration measuring unit 11, rotation measuring unit 12, magnetic field measuring unit13, pressure and clamp measuring unit 14. The acceleration unit system 11 is connected to the acceleration buffer 16, and a rotation measurement unit 12 is coupled to the rotation buffer 17, magnetic field measuring unit 13 is connected to the magnetic field buffer 18, pressure and clamp measuring unit 14 is connected to pressure and clamp buffer 19.

In the parameterization unit UC there are static data 20s and dynamic data 20D measuring units, static data measuring unit 20S is connected to displacement buffer 15 present in signature acquisition unit UP and static data comparative buffer 21S present in authenticity verification unit UA. The dynamic data measuring unit 20D is connected to acceleration buffer 16, rotation buffer 17, magnetic field buffer 18, pressure and clamp buffer 19 located in the signature acquisition unit UP, and to static data comparative unit 21 D located in authenticity verification unit UA.

In the authenticity verification unit UA there is static data comparative unit 21 S, which is connected to static data reference memory 22S and the dynamic data comparative unit is 21 D is coupled with the dynamic data reference memory 22D.

Authenticity verification unit UA is connected to screen E.

The data stream from the hand device D is sent to the receiving unit UO where static signals acquired by the signature trajectory acquisition unit 1 S are stored in the form of X and Y in the first buffer 2S. X and Y are subjected to bandpass filtering-through the first filtration unit 3S, a bandlimited signal is processed to remove noise in the first unit of noise removal 4S. The first noise 4S removal unit operates based on discrete wavelet transform mechanism. The processed signal is sent to the first of distortion elimination unit 5S, which operates on the basis of median filtration mechanism. Parallel to static signals, the receiving unit UO transmits the dynamic signals to signature dynamic data acquisition unit ID acquired from acceleration, rotation, magnetic field, pressure and clamp sensors, which are saved as a vector of instantaneous values in the second buffer 2D, vector of the instantaneous values is subjected to filtration band-pass-through in the second filtration system 3D, band limited vector is sent to the other 4D noise removal system, which operates on the basis of the discrete wavelet transform mechanism. The processed signal is sent to a second distortion elimination unit 5D, which operates on the basis of median filtration mechanism.

The pre-processed static and dynamic parameters are transmitted in sequence to the buffer of processed static parameters 7S and to the buffer of processed dynamic parameters 7S 7D, in parallel the parameters are transmitted to the signature beginning and end unit 6, which is connected to clock 8 and the timestamps buffer 9.. The processed static parameters are transmitted to the displacement measuring unit 10 which stores the result of measurement together with the corresponding time stamp in the displacement buffer 15. The processed dynamic parameters are transmitted in parallel to the units of acceleration measuring 11, rotation measuring 12, magnetic field measuring 13, pressure and clamp measuring 14. The measurement results are transferred successively to the acceleration buffer 16, rotation 17, the magnetic field 18, the pressure and clamp together with the relevant timestamps. In the static buffer 15 and dynamic buffers 16,17,18,19 the series of individual parameter values are recorded since the beginning of signature until the end of the signature calculated in signature beginning and end detection unit 6.

The buffered time series are transferred to parameterization unit UC, which consists of a block determining static characteristics of signature measurement 20S and dynamic characteristics of the signature 20D. They are responsible for the parameterization of already processed measurements of static data transmitted from the displacement buffer 15 and measurements of the dynamic data transmitted from the acceleration buffer 16, the rotation buffer 17, the magnetic field buffer 18 and pressure and clamp buffer 19.

The measurements of static characteristics and dynamic characteristics calculated in the block determining static characteristics of signature measurement 20S and dynamic characteristics of the signature 20D are transferred to the static data comparative unit 21S and dynamic data comparative unit 2ID, in which the analysis is carried out to determine the degree of similarity of these measures with reference measures stored in the static data reference memory 22S and dynamic data reference memory 22D.

Holding on to the hand-held unit P located in the stand by the user launches wireless data transmission. The user gives the signature holding the device in a conventional manner such as a pen, wherein the pen tip comprising a displacement sensor is moved on any surface. When the signature is complete and hand-held tool P is placed in the stand, the transmission is terminated. Placing a hand-held unit P in the stand sets the verification unit UM in the state of completion of the signature acquisition, which is synonymous with starting the process of verifying the authenticity of the signature or storing the signature reference in the verification unit UM memory of the UM, in case the user uses the invention for the first time.

The result of a verification signature compliance with the pattern stored in the memory is displayed on the screen E.

## Claims

1. The unit to give a handwritten signature and verify its authenticity provided with a hand-held tool equipped with multiple sensors comprising acceleration sensor, pressure and clamp sensor and the transmission unit that is connected preferably in non-contact manner with the receiving unit (UO) which is connected to a verification unit (UM), preferably connected to the screen **characterized in that** the hand-held tool (D) is additionally equipped with at least one rotation sensor, preferably registering rotation in X, Y, Z axes, at least one magnetic field sensor, preferably registering magnetic field strength in X, Y, Z axes and displacement sensor analyzing the movement of the tip of a hand-held tool in X, Y axes, and verification unit (UM) comprising a pre-processing unit (UW), signature acquisition unit (UP), parameterization unit (UC) and authenticity verification unit (UA).

2. The unit according to claim. 1 **characterized in that** the pre-processing unit (UW) consists of the signature trajectory acquisition unit (1S) acquired from the displacement sensor and transferred to the first buffer (2S) connected to a first filtration system (3S), which in turn is connected to a first system of noise removal (4S) connected to the first array of distortion elimination (5S), and also is equipped with signature dynamic data acquisition unit (ID) acquired from the sensors of acceleration, rotation, magnetic field, clamp and pressure that are transmitted to the second buffer (2D) connected to the second filtration unit (3D), which in turn is connected to a second noise removal unit (4D), connected to the second distortion elimination unit (5D), while the first distortion elimination unit (5S) and second distortion elimination unit (5D) are connected to signature beginning and end detection unit (6) and connected in parallel to occurring as first in signature acquisition unit (UP), static data buffer (7S) and dynamic data buffer (7D), while in acquisition unit (UP), signature beginning and end detection unit (6) is connected to feed back to the clock unit (8) which is connected to timestamps buffer (9), displacement measuring unit (10), acceleration measuring unit (11), rotation measuring unit (12), magnetic field measuring unit (13) pressure and preferably clamp measuring unit (14) and static data buffer (7S) is connected to displacement measuring unit (10) which is connected to the displacement buffer (15) and dynamic data buffer (7D) is connected in parallel with acceleration measuring unit (11), and rotation measuring unit (12), and a magnetic field measuring unit (13), and pressure and preferably clamp measuring unit (14), and acceleration measuring unir (11) is connected to acceleration buffer (16), rotation measuring unit (12) is connected to rotation buffer (17), the magnetic field measuring unit (13) is connected to magnetic field buffer (18), pressure and preferably clamp measuring unit (14) are connected to pressure and preferably clamp buffer (19).

3. A unit according to claim 2, **characterized in that** in parameterization unit (UC) there are static data (20S) and dynamic data (20D) measuring units, while the static data measuring unit (20S) is connected to displacement buffer (15) located in the signature acquisition unit (UP) and static data comparative buffer (21 S) located in signature authenticity verification unit (UA), while dynamic data measuring unit (20D) is connected to acceleration buffer (16) located in signature acquisition unit (UP), rotation buffer (17), magnetic field buffer (18), pressure and preferably clamp buffer (19) and static data comparative unit (21 D).located in signature authenticity verification unit (UA).

4. A unit according to claim 3, **characterized in that** in authenticity verification system (UA) there is static data comparative unit (21S) which is connected to static data reference memory (22S) and dynamic data comparative unit (21 D) is coupled with dynamic data reference memory (22D).
